# EUROPEAN PATENT APPLICATION

(11) **EP 2 896 776 A1**
(43) Date of publication of application: **22.07.2015**
(21) Application number: 13832596.4
(22) Date of filing: 30.08.2013
(51) Int. Cl.: E06B 9/24, E06B 3/66, E06B 7/28, F21S 2/00, G02B 5/00, G02B 5/02, G02B 5/08, F21Y 101/02

(54) **WINDOW STRUCTURE BODY**

(30) Priority: 03.09.2012 JP 2012192821; 26.02.2013 JP 2013036330
(71) Applicant: Mirai Kikaku Co. Ltd., Okinawa 901-1113 (JP)
(72) Inventor: NOHARA, Tsuyoshi, Okinawa 901-1113 (JP); ARIGA, Shunji, Naha-shi, Okinawa 903-0804 (JP)
(74) Representative: Hoffmann Eitle
(86) International application number: PCT/JP2013/073262
(87) International publication number: WO 2014/034831

(57) **Abstract**

To realize a window structure that can ensure that scenery can be viewed from an indoor space during the daytime and prevent peeping from outdoors regardless of whether it is daytime or nighttime.

A window structure including a translucent planar light emitter in which a half mirror layer is provided on the inside thereof, and glass panels provided on an inside and an outside of the planar light emitter. The planar light emitter includes a translucent resin panel, a light-emitting element provided on an end surface of the resin panel, and a light diffusing layer provided on a surface of the translucent resin panel. A surface of the planar light emitter emits light when light of the light-emitting element enters from the end surface of the resin panel, is reflected by the half mirror layer, and is diffused by the light diffusing layer.

## Description

### Technical Field

The present invention relates to a window structure that ensures that scenery can be viewed from a space inside of a building and prevents peeping from a space outside of a building.

### Background Art

Various conventional inventions have been disclosed in relation to a window structure using a magic mirror (a beam splitter which looks like a mirror from a bright side and looks transmissive when viewed from a dark side).

As one example, Patent Literature 1 discloses providing an illumination device across the top, bottom, left and right of a window frame on the outdoor side of a transparent panel such as a half mirror that is fitted into the window frame, and providing reflectors that reflect light from the illumination device to make the illumination uniform on the indoor side. According to Patent Literature 1, the indoors cannot be seen when looking at the indoors from the outdoor side, but the scene outdoors can be seen from the indoors even at nighttime when looking at the outside from the indoor side.

As another example, Patent Literature 2 discloses the following: forming a thin metallic film layer on one surface of a transparent glass substrate or resin substrate to create a half mirror (a mirror surface from the outside) ; adhering and laminating a semitransparent tough resin imaging sheet in which light diffusing particles are dispersed on a surface (inside) of the thin metallic film layer to create a daylighting surface material for a window; and using the daylighting surface material such that the resin imaging sheet is on the indoor side. According to Patent Literature 2, during the daytime when the outdoor side is relatively bright, the transparent glass substrate (or resin substrate) and the thin metallic film layer function as a half-mirror (a mirror surface from the outside), and during the nighttime when the outdoor side is relatively dark, the resin imaging sheet functions as a blind to block the sight line from the outdoors.

Also, as a planar light emitter, conventional light guide plates including an LED light source used in screens such as a television or personal computer screen are widely used. The principal material of a light guide plate is a resin material such as acrylic resin, and it has been difficult to use such a light guide plate as is in a main opening as a construction material due to its flammability.

### Citation List

### Patent Literature

Patent Literature 1: JP 06-001691 Y
Patent Literature 2: JP 2010-001628 A

### Summary of Invention

### Technical Problem

In the window disclosed in Patent Literature 1, the illumination device is positioned in the center of the transparent panel. Thus, when looking at the outdoor side through the transparent panel from the indoor side, it is not possible to see through the center of the window, and thus the view is poor. There are also problems related to the cost and maintenance of the illumination device.

The daylighting material disclosed in Patent Literature 2 functions as a half mirror (a mirror surface from the outside) during the daytime, and the daylightingmaterial prevents peeking into the inside from the outside. However, when looking at the outside from the inside, it is not possible to see the outside even during the daytime due to the creamy white imaging sheet.

The present invention was created in consideration of the above-described problems, and an object thereof is to ensure that scenery can be viewed from an indoor space during the daytime and prevent peeping from outdoors regardless of whether it is daytime or nighttime.

Also, one maj or problem of the present invention is to greatly expand the use of planar light emitters in construction by enabling planar light emitters such as a light guide plate, in which the principal material is a resin material such as acrylic resin, to be used in a main opening of a building.

Conventionally, it has generally been recognized that either a resin material such as acrylic resin or a glass material is selected for use as a translucent material depending on the use thereof, and the characteristics of both were not used in combination. This use in combination was first attempted by the present invention, and the present invention is the first application of such a combination as a construction opening member.

### Solution to Problem

A window structure according to claim 1 of the present invention includes : a translucent planar light emitter in which a half mirror layer is provided on the inside thereof, and glass panels provided on an indoor side and an outdoor side of the planar light emitter.

The half mirror layer can be made of any substance as long as it enables the outside (outdoor side) to be seen from the inside (indoor side) and becomes a mirror surface when viewing the inside (indoor side) from the outside (outdoor side). The half mirror layer can be a magic mirror film or magic mirror glass in which a thin metallic film layer is provided on the surface of a transparent panel.

The glass panels provided on the inside and outside surfaces of the planar light emitter can be made of any substance as long as they are glass panels having transparency, the strength to be used as a window, and durability. A glass panel being commercially available for use as a window can be used. A colored transparent panel can also be used. Further, ultraviolet blocking glass and the like can be used.

The planar light emitter can be made of any substance as long as it has a planar shape, is translucent in a non-light emitting state, and emits light across its entire surface and is not see-through during light emission. The planar light emitter can be made to emit light by providing a light-emitting device on a transparent panel. A transparent organic EL and the like can also be used.

In the window structure according to claim 2 of the present invention, the half mirror layer is the planar light emitter, and is provided on either one of the inside or the outside of the indoor side glass panel.

The half mirror layer can be provided on either one of the inside (indoor side) or outside (outdoor side) of the glass panel provided on the inside (indoor side) of the light emitter. However, the half mirror layer is preferably provided on an outer surface side (light emitter side) of the glass panel.

In the window structure according to claim 3 of the present invention, an ultraviolet blocking layer is provided on the outdoor side of the planar light emitter and provided on either one of an inner surface side or an outer surface side of the outdoor side glass panel.

The ultraviolet blocking layer can be made of any substance as long as it can block ultraviolet rays from sunlight that is irradiated on the planar light emitter from the outside. The ultraviolet blocking layer can be an ultraviolet blocking sheet, an ultraviolet blocking paint, or can be achieved by using an ultraviolet blocking glass as the outside glass panel.

The ultraviolet blocking rate may be on a level which does not have any effect on the deterioration of the translucency of light of the planar light emitter, and is preferably 60% to 100%, and more preferably 90% to 100%.

In the window structure according to claim 4 of the present invention,
the translucent planar light emitter includes a translucent resin panel, a light-emitting element provided so that a light-emitting surface of the light-emitting element faces an end surface of the resin panel, and a light diffusing layer provided on a surface of the translucent resin panel, and
a surface of the planar light emitter emits light when light of the light-emitting element enters from the end surface of the resin panel, is reflected by the half mirror layer, and is diffused by the light diffusing layer.

The translucent resin panel can be made of any substance as long as it has translucence and allows light to enter from an end surface thereof. A commercially available acrylic resin panel or the like can be used. A resin panel having high light transmittance is preferable. A thermoplastic resin such as methacrylic resin, polycarbonate resin, polystyrene resin, polyolefin resin, and the like can also be used.

The light-emitting element can be made of any substance as long it enables light to enter from the end surface of the resin panel. A small fluorescent lamp/illumination lamp or an elongated illumination device or light-emitting device in which light is guided by a lens or the like so that light can enter into the end surface can be used. A light-emitting element which enables light to enter uniformly from the end surface is preferable.

The light diffusing layer can be made of any substance as long as it can receive light that enters into the resin panel from the light-emitting element and diffuse the light so that the entire surface of the resin panel emits light. As diffusing elements, fine particles and grains, foam, or the like can be used, and the diffusing elements can be provided inside of or on the surface of the resin panel. Also, fine convexities/concavities or cavities can be provided on the surface of or inside of the resin panel. Further, a gas layer or a liquid layer can be provided as the light diffusing layer.

In the window structure according to claim 5 of the present invention, the light-emitting element is a light-emitting diode (LED).

The light-emitting diode (LED) can be monochromatic (white) or trichromatic (red, blue, yellow). The use of a bar module in which a plurality of LEDs is aligned along an end surface of the resin panel is preferable.

The distance between a light-emitting part of the LED and the end surface of the resin panel is preferably set such that all of the light can enter from the end surface, and about 0 to 1.0 mm is preferable. Further, a light-collecting cover or a light-collecting lens can also be provided.

Light which enters from one end surface of the resin panel is preferably subjected to a reflecting treatment at the opposite end surface, and LED bar modules can be provided at both opposing end surfaces. In addition, LED bar modules can be provided at three end surfaces or at all four end surfaces.

In the window structure according to claim 6 of the present invention, a light emission control means of a plurality of light-emitting elements provided on the end surface of the resin panel is provided, and the light emission control means controls the switching on/switching off and light emission illuminance and color of each of the light-emitting elements, and arbitrarily changes a light emission shape, light emission color, light emission pattern of the planar light emitter.

The light emission control means can be made of any substance as long as it can control the light emission state of the light-emitting elements such as LEDs. The light emission control means preferably can control the light emission duration, strength, and timing of each light-emitting element, and can cause the light-emitting elements to emit light so that the window can be used for advertising/publicity. A light emission control means that can use light to create an effect of opening/closing a curtain like a curtain of a window, or to create various screen designs like a computer screen can be used.

In the window structure according to claim 7 of the present invention, light diffusing particles are dispersed inside the light diffusing layer.

The light diffusing particles can be made of any substance as long as they are particles that diffuse light. Organic fine particles such as acrylic cross-linked beads and MS cross-linked beads, inorganic fine particles such as silica, titanium oxide, and barium sulfate, and the like can be used.

In the window structure according to claim 8 of the present invention, concavities/convexities are provided on the surface of the light diffusing layer.

The concavities/convexities must be formed in a state in which the transmittance of the surface is maintained, and thus sandblasting treatments, ground glass treatments, and the like are not preferable. Convex parts and concave parts are preferably provided while maintaining a fixed interval therebetween. Small concavities/convexities can be created at fixed intervals by hot-press molding when shaping the surface of the resin panel. The interval can be about 0.5 to 4.0 mm, and is preferably about 1.0 to 2.0 mm. The size of the convex parts and concave parts can be about 0.2 to 3.0 mm, and is preferably about 0.5 to 1.0 mm.

In the window structure according to claim 9 of the present invention, the surface of the light diffusing layer is subjected to printing having a light diffusing effect.

Silk printing using printing ink that has a light diffusing effect can be used. White resin ink or the like can be used. Further, as a light diffusing agent, titanium oxide fine particles, acrylic bead particles, silica fine particles, irregular reflection particles such as fine hollow particles, fluorescent bodies, and the like can be mixed into the resin ink. Volatile curable ink or ultraviolet curable ink can also be used. As the printing having a diffusing effect, printing can be performed in a pattern of dots with intervals therebetween. The interval can be about 0.5 to 4.0 mm, and is preferably about 1.0 to 2.0 mm. The dot size can be about 0.1 to 3.0 mm, and is preferably about 0.5 to 1.0 mm. The dot shape can be any shape, such as circular, polygonal, or irregular.

### Advantageous Effects of Invention

According to the present invention, the following effects are achieved.
(1) When the present window structure is installed in a window, it functions as an ordinary magic mirror in cases in which the indoor side is darker than the outdoor side like during the daytime. In cases in which an indoor space is brighter than an outdoor space like during the nighttime, the planar light emitter is made to emit light so that the entire window emits light and can be put into a state in which the inside cannot be seen from the outside. Thus, it can be ensured that scenery can be viewed from the inside during the daytime, and peeping from the outdoor side can be prevented during both daytime and nighttime.
(2) An LED lamp is used instead of an ordinary light, and thus the running costs are inexpensive.
(3) Since an LED lamp is used, the present window structure has good durability, is compact and light, and is easy to maintain.
(4) The present window structure lights up at nighttime, and thus it can be used for advertising/publicity.
(5)The light emission control means of the light-emitting elements enables the window of a building to be designed with various patterns and colors.
(6) By using an LED bar module and controlling the light emission, the area that is illuminated can be changed as if opening/closing a curtain so as to realize a curtain of light.
(7) Since the inside and the outside of the planar light emitter is covered by glass panels, the window structure conditions such as strength, durability, and fire resistance can be sufficiently satisfied.
(8) Since the present invention is configured in a state in which an acrylic panel is sandwiched by glass panels, even if the glass panels were to break, an effect of preventing the glass from scattering is achieved.

### Brief Description of Drawings

Fig. 1 is a schematic view of a window structure according to a first embodiment when viewed in a cross-section view.
Fig. 2 is a schematic view of a window structure according to a second embodiment when viewed in a cross-section view.
Fig. 3 is a schematic view of a window structure according to a third embodiment when viewed in a cross-section view.
Fig. 4 illustrates an arrangement state of dots made of light diffusing particles of a diffusing part of the window structure according to the third embodiment.
Fig. 5 illustrates a light control state of the window structure according to the third embodiment.
Fig. 6 is an external appearance photograph from the outside of the window structure according to the third embodiment.

### Description of Embodiments

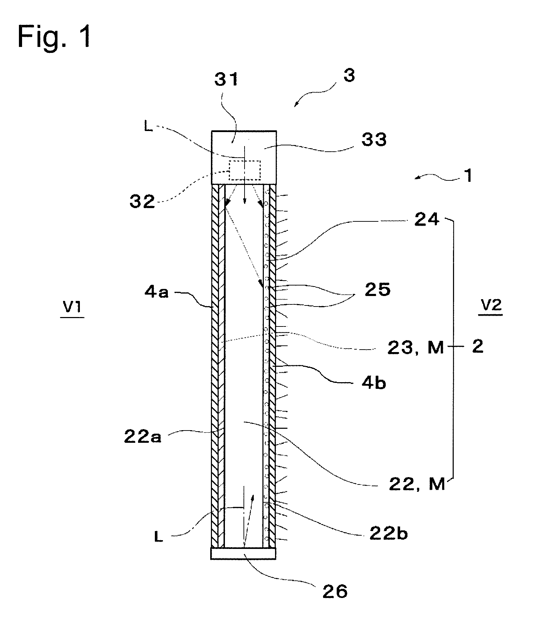

An embodiment of the present invention will now be explained based on Fig. 1. For convenience of explanation, this embodiment will be referred to as a first embodiment.

### First Embodiment

Fig. 1 is a schematic view of a window structure 1 according to the present invention when viewed in a cross-section view. The window structure 1 of the present embodiment includes a planar light emitter 2, a light-emitting device 3 thereof, and glass panels 4a and 4b that protect the inside and outside of the planar light emitter 2.

The planar light emitter 2 includes a substrate 22 made of a translucent resin panel. Although not illustrated, the substrate 22 is formed in a rectangular shape when viewed from the right or left side of Fig. 1. For the substrate 22, acrylic resin, polycarbonate, polyvinyl chloride, and the like can be used.

The substrate 22 can be colorless and transparent or colored and transparent. A thin metallic film layer 23 is laminated on a surface (V1 side) on the inside of the substrate 22.

The thin metallic film layer 23 is a thin film layer provided so as to have a predetermined light transmittance (light reflectance) by a metal having high light reflectance such as aluminum or silver. The thin metallic film layer 23 is formed on a surface 22a on the inside of the substrate 22 by deposition or coating.

The substrate 22 and the thin metallic film layer 23 constitute a so-called magic mirror M. When the magic mirror M is placed in a location which divides a bright space and a dark space, a person who is looking at the magic mirror M from the bright space will see their own image reflected on the magic mirror M. Further, a person who is looking at the magic mirror M from the bright space can see the bright space through the magic mirror M.

A diffusing layer 24 is laminated on a surface (V2 side) on the outside of the substrate 22.

The diffusing layer 24 is a translucent sheet-shaped layer, and is adhered to a surface (V2 side) 22b on the outside of the substrate 22. Reflecting particles 25 are included in a dispersed state within the diffusing layer 24. For example, silver particles can be used for the reflecting particles 25.

The light-emit ting device 3 is provided with a light-emitting part 31 that is disposed on top of the substrate 22. A bottom surface reflecting part 26 is disposed on the bottom of the substrate 22.

The light-emitting part 31 includes a light-emitting element 32, a housing 33, and a control circuit (not illustrated). The housing 33 is attached to a top end surface of the substrate 22, and houses the light-emitting element 32. The light-emitting element is disposed so as to face the top end surface of the substrate 22.

For example, a flat surface mirror or a convex surface mirror is used as the bottom surface reflecting part 26. The bottom surface reflecting part 26 deflects upwards a light L from the light-emitting part 31 that enters from the top end surface of the substrate 22 and passes through the substrate 22 to reach the bottom end surface of the substrate 22. The bottom surface reflecting part 26 orients the light L that enters such that it reaches the diffusing layer 24.

The light L from the light-emitting part 31 that passes through the top end surface of the substrate 22 to enter into the substrate 202 is reflected off the thin metallic film layer 23 or the bottom surface reflecting part 26 within the substrate 22, and then is diffused by the reflecting particles 25 within the diffusing layer 24 so as to be emitted from the outer surface side (V2 side) of the diffusing layer 24.

The glass panels 4a and 4b are respectively (4a and 4b) disposed on the inside of the planar light emitter 2, i.e. the inside (V1 side) of the thin metallic film layer 23, and on the outside of the planar light emitter 2, i.e. the outside (V2 side) of the diffusing layer 24.

As the glass panels, a glass panel that has the strength, durability, and fire resistance for use as a window structure can be used, and a commercially available glass panel for a window can be used. A product with high transparency is preferred.

When using the window structure 1 according to the present embodiment, if an indoor space V1 is brighter than an outdoor space V2 (such as during the nighttime), the light-emitting part 31 is illuminated. A light L that is irradiated from the light-emitting element 32 is diffused and irradiated downwards, and some of this light directly enters into the diffusing layer 24 to be diffused by the reflecting particles 25.

Further, some of the light is reflected by the magic mirror surface of the thin metallic film layer 23, and then enters the diffusing layer 24 to be diffused.

In addition, some of the light is directly reflected by the bottom surface reflecting part 26, and then enters the diffusing layer 24 to be diffused.

Thereby, the diffusing layer 24 on the outside (V2 side) of the substrate 22 emits light brightly and the entire glass panel 4b on the outside emits light, and thus the indoor side (V1 side) is not visible from the outdoor side (V2 side).

In the present embodiment, a translucent sheet-shaped layer is used as the diffusing layer 24. However, the diffusing layer 24 can also be obtained by dispersing and adhering the reflecting particles 25 for diffusing light on the outer surface side 22b of the substrate 22, or by forming a plurality of fine projections on the outer surface side 22b of the substrate 22. Such projections can be formed by a surface treatment of the substrate 22 or by deposition, printing, and the like.

Further, a color that can easily reflect light such as a transparent color, white, or silver can be printed in a dotted pattern by silk printing.

In silk printing, when forming a plurality of dots, the size of the dots in portions further from the light-emitting source maybe larger than that in closer portions, or the interval between the dots may be smaller in portions further from the light-emitting source than that in closer portions. Further, in order to increase the diffusing effect, the shape of the dots to be printed can be circular, or also polygonal or an irregular shape such as a star shape. In addition, with regard to the ink to be used, an ink in which reflecting particles are mixed into a transparent color can be used.

In the present embodiment, the thin metallic film layer 23 is formed on the inside surface 22a side of the substrate 22 as a magic mirror M. However, a film having a magic mirror function can also be adhered to the inside surface 22a side of the substrate 22.

In this way, according to the window structure 1 of the present embodiment, during the daytime, it is ensured that scenery can be viewed from the indoor side (V1 side) and peeping from the outdoor side (V2 side) is prevented by the magic mirror function. Further, at nighttime, peeping from the outdoor side (V2 side) is prevented by the light-emitting function.

In addition, according to the window structure 1 of the present embodiment, there is no portion that protrudes from the window frame as with a conventional illuminating apparatus, and thus the field of view when viewing the outside through the window from the indoor side (V1 side) is wider. Also, since there is no portion that protrudes from the window frame, dirt does not build up between the protruding portion and the window. Moreover, a situation in which the protruding portion breaks is no longer a problem.

Furthermore, the window structure 1 of the present embodiment includes the bottom surface reflecting part 26. Therefore, the light L from the light-emitting part 31 is guided to the diffusing layer 24 without wasting any light, and thus the outer surface 22b side of the diffusing layer 24 is brighter and peeping from the outdoor side (V2 side) can be more reliably prevented.

### Second Embodiment

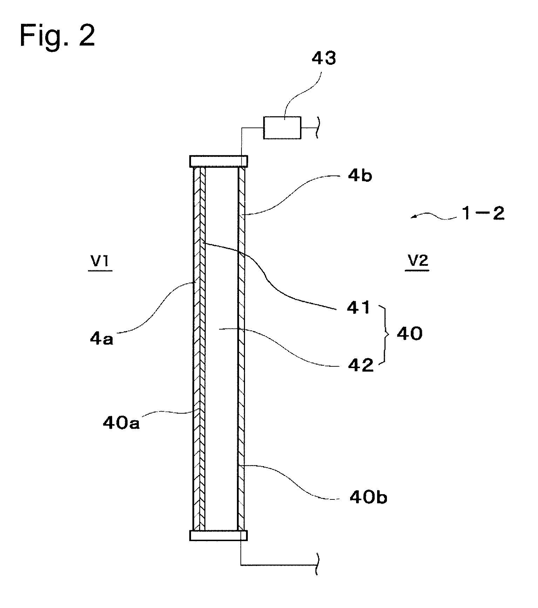

Another embodiment of the present invention will now be explained based on Fig. 2. For convenience of explanation, this embodiment will be referred to as a second embodiment. This embodiment is related to a window structure, and is basically based on the first embodiment. Portions which are identical to those in the first embodiment will be assigned the same reference numerals, and explanations thereof will be omitted.

Fig. 2 is a schematic view of a window structure 1-2 when viewed in a cross-section view. The window structure 1-2 of the present embodiment includes a planar light emitter 40, and glass panels 4a and 4b that protect the inside and outside of the planar light emitter 40.

The planar light emitter 40 includes a transparent organic EL illumination panel 42 to which a thin metallic film layer 41 is laminated on the inner surface side (V1 side) thereof, and a control circuit 43. The control circuit 43 controls the voltage that is applied to the organic EL illumination panel 42. The organic EL illumination panel 42 is in a state which allows light to pass through when no voltage is applied, but when voltage is applied, the entire panel illuminates uniformly.

The glass panels 4a and 4b on the inside and outside of the planar light emitter 40 are made of glass which protects the planar light emitter and has appropriate strength and durability. Commercially available glass for a window is used.

When using the window structure 1 according to the present embodiment, when an indoor side (V1 side) is brighter than an outdoor side (V2 side) (such as during the nighttime), a voltage is applied to the organic EL illumination panel 42 using the control circuit 43. Thereby, the entire organic EL illumination panel 42 illuminates, an outer surface 40b of the planar light emitter 40 illuminates, and the glass panel 4b on the outside becomes bright. Thus, the indoor side (V1 side) is not visible from the outdoor side (V2 side).

### Third Embodiment

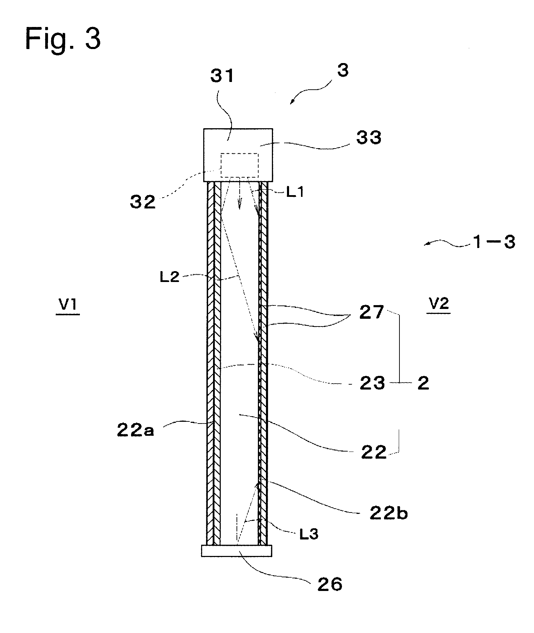

Fig. 3 is a schematic view of a window structure 1-3 when viewed in a cross-section view. The window structure 1-3 of this embodiment includes a planar light emitter 2, a light-emitting device 3 thereof, and glass panels 4a and 4b that protect the inside and outside of the planar light emitter 2.

The planar light emitter 2 includes a substrate 22 made of a translucent resin panel. A thin metallic film layer 23 is laminated on the inside (V1 side) of the substrate 22, and a diffusing part 27 is provided on the outside (V2 side) of the substrate 22.

The thin metallic film layer 23 is a thin film layer provided so as to have a predetermined light transmittance (light reflectance) by a metal having high light reflectance such as aluminum or silver.

The substrate 22 and the thin metallic film layer 23 constitute a so-called magic mirror.

The light-emitting device 3 is provided with a light-emitting part 31 and is disposed on top of the substrate 22. A bottom surface reflecting part 26 is disposed on the bottom of the substrate 22.

The light-emitting part 31 includes a light-emitting element 32, a housing 33, and a control circuit (not illustrated). The housing 33 is attached to a top end surface of the substrate 22, and houses the light-emitting element 32. The light-emitting element is disposed so as to face the top end surface of the substrate 22.

The diffusing part 27 in this embodiment is obtained by disposing dots made of white ink on the surface of the outer surface (V2 side) 22b of the substrate 22. Circular dots with a diameter of 1 mm to 2 mm are formed by silk printing so as to be dispersed across the entire surface at intervals of 0.5 mm to 2 mm.

Commercially available glass panels for windows can be used for the glass panels 4a and 4b that protect the inside and outside of the planar light emitter 2.

The gap between the planar light emitter 2 and the glass panel 4b on the outside (V2 side) may be small, but this space is also suitable as an air layer. When it is transparent, this space is also suitable as another gas layer, liquid layer, gel layer, solidified layer, transparent adhesive layer, and the like.

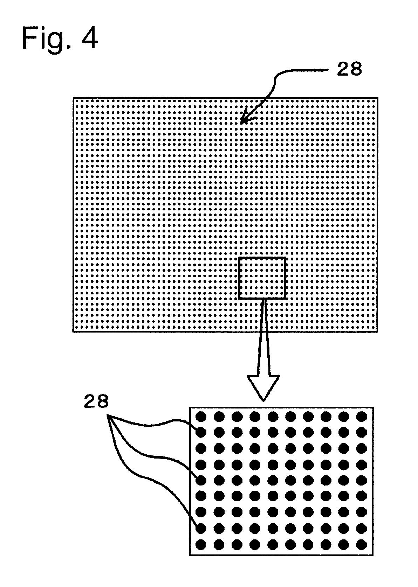

Fig. 4 illustrates an arrangement state of dots 28 made of light diffusing particles of the diffusing part 27. (The dots are white, but are illustrated in black in Fig. 4.) The diameter of the dots 28 is about 1 mm at the uppermost part, and increases in size moving downwards to reach about 2 mm at the bottommost part. The interval between the dots 28 is wider (about 2 mm) at the top part, and narrows moving downwards (to about 0. 5 mm).

Light irradiated from an LED light emitter 32 passes through the top end surface of the substrate 22 to enter into the substrate 22, and then is directly diffused by the dots 28 made of light diffusing particles of the diffusing part 27 formed on the outside surface (V2 side) 22b of the substrate 22 as shown by the arrow mark L1. Thus, the outdoor side (V2 side) emits light and the outside glass panel 4b becomes bright.

Some of the light irradiated from the LED light emitter 32 reflects on the magic mirror surface of the thin metallic film layer 23 as shown by the arrow mark L2, and then is irradiated as reflected light to the outer surface (V2 side) 22b of the substrate 22. Therein, this light is diffused by the dots 28 made of light diffusing particles of the diffusing part 27 and emitted, and thus the glass panel 24b on the outdoor side (V2 side) becomes bright.

Further, some of the light irradiated from the LED light emitter 32 is directly reflected on the bottom surface reflecting part 26 disposed at the bottom to the outer surface 22b side of the substrate 22 as shown by the arrow mark L3, and some of this light is reflected on the magic mirror surface of the thin metallic film layer 23 as mentioned above. The light is then diffused by the dots 28 made of light diffusing particles of the diffusing part 27, and thus the outdoor side (V2 side) emits light and the glass panel 24b becomes bright.

During use of the window structure 1-3 of the present embodiment, when the indoor side (V1 side) is brighter than the outdoor side (V2 side) (such as during the nighttime), the LED light emitter 32 is illuminated.

The light L that is irradiated from the LED light emitter 32 is diffused and irradiated downwards, and then directly or indirectly enters into the diffusing part 27 and is diffused and emitted.

Thereby, the glass panel 4b on the outside (V2 side) becomes bright, and thus the indoor side (V1 side) is not visible from the outdoor side (V2 side) even during the nighttime.

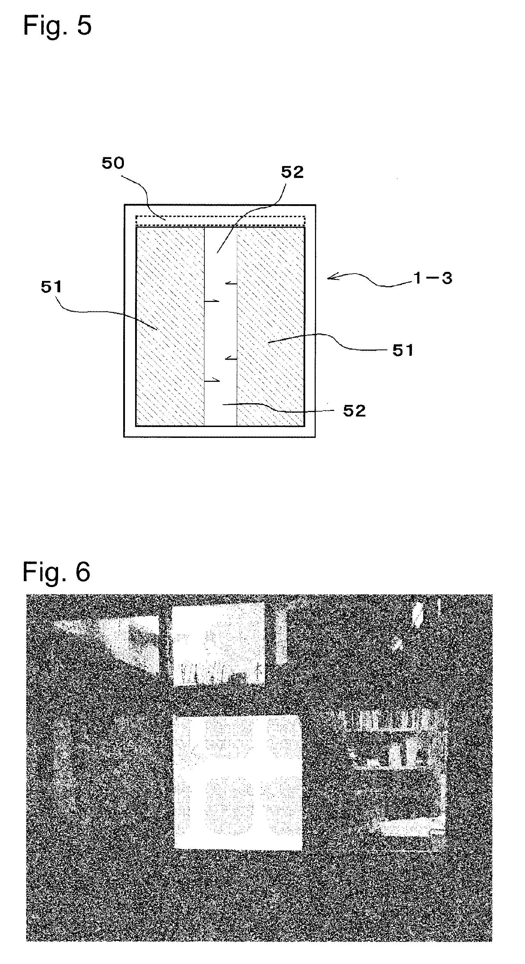

Fig. 5 illustrates an example of a light emission control method when using the window structure of the third embodiment of the present invention.

Fig. 5 illustrates a window structure in which the inside and outside of the planar light emitter in a window frame are protected by glass panels.

In the top part inside the frame, a bar module in which LEDs are used as the light-emitting elements is provided, and therein a plurality of LEDs is arranged in an aligned fashion so that light enters into the top end surface of the substrate 22.

Therefore, various light emission states can be realized by controlling the light emission of the LEDs.

As shown in Fig. 5, by continuously illuminating the aligned LEDs from both ends toward the center, a condition in which a window curtain is closed can be expressed with light. Thus, a curtain made of light can be realized.

Since the light emission can be freely controlled in this way, advertisements/publicity can be achieved using light such as by creating light emission shapes and dynamic changes of various designs. When trichromatic LEDs are used instead of monochromatic LEDs, designs and dynamic changes of various colors can also be realized.

Below are results obtained upon measuring with a digital illumination intensity meter (made by MotherTool Co. , Ltd.) the difference in illuminance between the outer surface (V2 side) 4b of the planar light emitter 2 and the inner surface (V1 side) 4a of the planar light emitter 2 using the magic mirror unit 1-3 according to the present embodiments when placed in a portion of the windows on the first floor of an office building.

- Window Structure Specifications:
   White LED
   Luminous Flux: 0.61 lm (lumens)
   Attachment Pitch: 8.5 mm
   Thin Metallic Film Sheet
   Thickness: 46 µm
   Solar Reflectance: 40%
   Substrate - Acrylic Resin Panel
   Panel Thickness: 3 mm
   Glass Panels - Float Transparent
   Panel Thickness: 6 mm
   Diffusing Part - Ink Treatment of White Ink Dots
   Diameter: 0.5 to 2 mm
   Pitch: 0.5 to 2 mm
- Measurement Time: Approx 1 hour after Sundown (8 pm)
- Measurement Location: First Floor Windows of an Apartment Building in Haebaru-cho, Okinawa Prefecture
- Measurement Results:
   Indoor side Surface Illuminance (V1 Side Surface)
   Unit Top: 158 Lux
   Unit Middle: 188 Lux
   Unit Bottom: 180 Lux
   Outdoor side Surface Illuminance (V2 Side Surface)
   Unit Top: 1195 Lux
   Unit Middle: 1547 Lux
   Unit Bottom: 1503 Lux

Fig. 6 is a photograph showing the entirety of the windows of the office building when viewed from the outside. The illuminated window in the center is a window to which the planar light emitter of the present invention is attached. In the above measurement results, the difference in illuminance between the indoor side surface and the outdoor side surface of the window structure of the present invention was about eightfold. During the nighttime, the window was illuminated in a bluish-white color from the outside, and the inside was not visible. Also, when viewing the outside from inside the balcony, there was some reflection but the outside was visible.

During the daytime, the LED light emitter 23 was not illuminated, but the function as a normal magic mirror was realized. Thus, the outside was visible from inside the balcony, and from the outside the window functioned as a mirror surface to reflect an image such that the inside was not visible.

In this way, according to the window structure of the present embodiment, during the daytime, it is ensured that scenery can be viewed from the indoor side (V1 side) and peeping from the outdoor side (V2 side) is prevented by the magic mirror effect. Further, at nighttime, peeping from the outdoor side (V2 side) is prevented by the light-emitting effect.

In addition, the window structures explained above can be applied to any kind of attachment target having a hollow window structure (such as a wall of a building, a billboard, a show window of a store). By lighting up the outdoor side (V2 side), it is ensured that scenery can be viewed from the indoor side (V1 side) and peeping from the outdoor side (V2side) is prevented, and the designability of the outer appearance of the attachment target which can be seen from the outdoor side (V2 side) can be enhanced.

In addition, in the window structure according to the present embodiment, since the light-emitting device fits within the window frame, the window structure can be applied to various kinds of windows. For example, the window structure can also be applied to windows of a train or automobile and the like.

### Reference Signs List

- 1, 1-2, 1-3: window frame structure unit
- 2: planar light emitter
- 3: light-emitting device
- 4a, 4b: glass panel
- 22: substrate
- 23: thin metallic film layer
- 24: diffusing layer
- 25: reflecting particle
- 26: bottom surface reflecting part
- 27: diffusing part
- 28: dots
- 31: light-emitting part
- 32: light-emitting element
- 33: housing
- 40: planar light emitter
- 41: thin metallic film layer
- 42: organic EL illumination panel
- 43: control circuit
- 50: LED bar module
- 51: light-emitting part
- 52: non-light-emitting part

## Claims

1. A window structure, comprising:
a translucent planar light emitter in which a half mirror layer is provided on the inside thereof, and
glass panels provided on an indoor side and an outdoor side of the planar light emitter.

2. The window structure according to claim 1, wherein the half mirror layer is provided on the indoor side of the planar light emitter and provided on either one of an inner surface side or an outer surface side of the indoor side glass panel.

3. The window structure according to claim 1 or claim 2, wherein an ultraviolet blocking layer is provided on the outdoor side of the planar light emitter and provided on either one of an inner surface side or an outer surface side of the outdoor side glass panel.

4. The window structure according to any one of claims 1 to 3, wherein
the translucent planar light emitter includes a translucent resin panel, a light-emitting element provided so that a light-emitting surface of the light-emitting element faces an end surface of the resin panel, and a light diffusing layer provided on a surface of the translucent resin panel, and
a surface of the planar light emitter emits light when light of the light-emitting element enters from the end surface of the resin panel, is reflected by the half mirror layer, and is diffused by the light diffusing layer.

5. The window structure according to claim 3, wherein the light-emitting element is a light-emitting diode (LED).

6. The window structure according to claim 4 or claim 5, wherein
a light emission control means of a plurality of light-emitting elements provided on the end surface of the resin panel is provided, and
the light emission control means controls the switching on/switching off, light emission illuminance and color of each of the light-emitting elements, and arbitrarily changes a light emission shape, light emission color and light emission pattern of the planar light emitter.

7. The window structure according to any one of claims 4 to 6, wherein light diffusing particles are dispersed inside the light diffusing layer.

8. The window structure according to any one of claims 4 to 6, wherein concavities/convexities are provided on the surface of the light diffusing layer.

9. The window structure according to any one of claims 4 to 6, wherein the surface of the light diffusing layer is subjected to printing having a light diffusing effect.
